# EUROPÄISCHE PATENTSCHRIFT

(11) **EP 0 474 091 B1**
(45) Veröffentlichungstag und Bekanntmachung des Hinweises auf die Patenterteilung: **06.11.1996**
(21) Anmeldenummer: 91114312.1
(22) Anmeldetag: 26.08.1991
(51) Int. Cl.: G02B 6/36, G02B 6/40

(54) **Endverschluss-Anordnung für Signal-Uebertragungskabel, insbesondere Glasfaserkabel**
Pothead device for signal transmission cables, particularly for glass fibres cables
Boîte d'extrémité pour câbles de transmission de signaux, particulièrement pour câbles à fibres de verre

(30) Priorität: 03.09.1990 CH 2851/90; 12.03.1991 CH 744/91
(43) Veröffentlichungstag der Anmeldung: 11.03.1992
(73) Patentinhaber: Reichle + De-Massari AG Elektro-Ingenieure, 8620 Wetzikon (CH)
(72) Erfinder: Reichle, Hans, CH-8620 Wetzikon (CH)
(74) Vertreter: Petschner, Goetz

(56) Entgegenhaltungen:
- EP-A- 0 288 808
- EP-A- 0 329 935
- EP-A- 0 369 524
- US-A- 4 585 303

## Beschreibung

Die vorliegede Erfindung betrifft eine Endverschluss-Anordnung für Glasfaserkabel der Tele- und Datenkommunikation, mit einem aus Teilen lösbar zusammengesetzten, Stecker- oder Zugentlastungsmittel und Spleissmittel tragenden Gehäuse zur Bildung eines ersten Raumes mit raumbegrenzenden Führungslaschen für die Aufnahme von Glasfaserkabel-Arbeitsreserven und zur Bildung eines Spleissraumes mit Spleissplatten sowie kanalbildenden Begrenzungsteilen zur Aufnahme einer geschlauften Glasfaserkabel-Spleissreserve.

In den Signal-Uebertragungsbereichen der Technik, wie Telefonie, On-Line-Systeme und dgl. gewinnen Glasfaserkabel ständig an Bedeutung.

Problematisch dabei ist aber der Endverschluss solcher Kabel für den Anschluss an die betreffenden Gerätschaften, wofür die Kabelenden in sogenannten Endverschluss-Gehäusen aufgenommen und als mit entsprechenden Stecker- oder Rangierkabel-Zugentlastungsmitteln versehene Einzelleiter herausgeführt werden.

Da es sehr schwierig ist, die Einzelleiterenden an Ort mit den Steckerelementen ausreichend dämpfungsarm zu verbinden, ist man dazu übergegangen, die Stecker fabrikmässig an den Adern eines Glasfaserkabelstückes anzuschliessen, um an Ort dann diese Adern mit jenen der Uebertragungsleitung zu verspleissen (verschweissen, verkleben).

Die EP-A-0 288 808 des gleichen Anmelders beschreibt bereits ein Endverschluss-Gehäuse der vorgenannten Art, dessen Gehäuseteile aufklappbar und somit innenseitig zugänglich sind, um die Ader-Enden von Uebertragungskabel und Stecker zugentlastet zu verbinden resp. nach Bedarf zu trennen und wiederzuverbinden.

Diese Anordnung genügt aber nicht allen heutigen Anforderungen bezüglich Kompaktheit und Variabilität in der Anschlusstechnik, insbesondere lässt die Notwendigkeit, für ein Arbeiten im Gehäuse dieses aufklappen zu müssen, eine enge Bauweise nicht zu.

Zwar verwenden die bekannten 19Zoll-Kassetten gemäss EP-A-0 329 935 verschiebbare Einsätze und Trennwände, die hier aber zur Lösung des Problems keinen Beitrag liefern.

Aufgabe der vorliegenden Erfindung ist es nun, eine Endverschluss-Anordnung der vorgenannten Art zu schaffen, welche sich bei freier Zugänglichkeit von Spleissraum und Steckeranschlüssen kompakt anordnen lässt.

Dies wird erfindungsgemäss dadurch erreicht, dass das Gehäuse eine aus zwei, in einer Ebene relativ zueinander verschiebbar miteinander verbundene Gehäuseschalen bestehende stapelbare Kassette ist, wobei die eine Schale stirnseitig eine Stecker- oder Rangierkabel-Zugentlastungsplatte umfasst und deren Boden auf einer Seite den ersten Raum sowie auf der anderen Seite einen zweiten Raum mit einem Ringkanal zur Führung der geschlauften und nachschleppbaren Glasfaserkabel-Arbeitsreserve begrenzt und wobei die andere Schale den Spleissraum aufweist.

Durch diese erfindungswesentlichen Massnahmen wird es möglich, Kassette neben Kassette paketweise hochkant in einem Gestell anzuordnen, wo dann die eine oder andere Schale einer Kassette für eine optimale Zugänglichkeit aus der vorderen Montageebene des Gestelles nach vorn oder aus der hinteren Montageebene nach hinten relativ zur anderen fixen Schale geschoben werden kann, ohne dass Glasfaserkabel resp. Glasfaserader ihren Mindest-Krümmungsradius unterschreiten können.

Beispielsweise Ausführungsformen des Erfindungsgegenstandes sind nachfolgend anhand der Zeichnung näher erläutert. Es zeigen:
- Fig. 1: in schaubildartiger Darstellung in Frontansicht eine erfindungsgemässe Endverschluss-Anordnung mit geschlossener Kassette;
- Fig. 2: die Anordnung gemäss Fig. 1 mit nach hinten auseinandergezogener Kassette;
- Fig. 3: in schaubildartiger Darstellung in Rückansicht die Anordnung gemäss Fig. 1; und
- Fig. 4: die Anordnung gemäss Fig. 3 mit nach vorn auseinandergezogener Kassette.

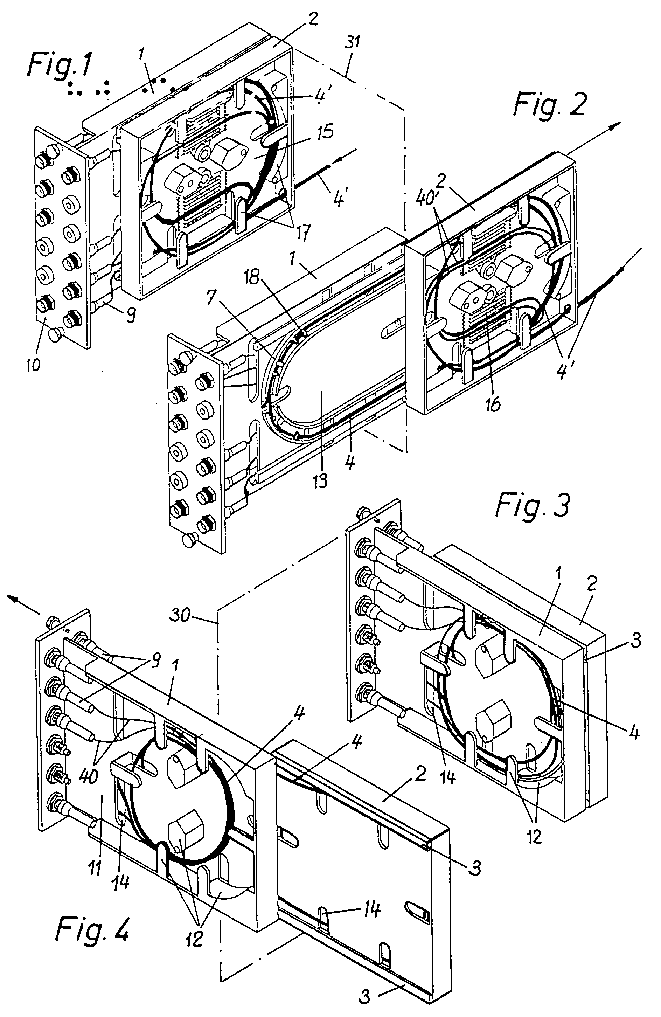

Die in den Fig. 1 bis 4 veranschaulichte Endverschluss-Anordnung umfasst ein kassettenförmiges Gehäuse aus hier zwei Schalen 1 und 2, welche in einer hochkanten Mittelebene der Kassette über Winkel-Führungsschienen 3 relativ zueinander verschiebbar miteinander verbunden sind.

Dies erlaubt, die Kassetten dicht bei dicht in ein Gestell (nicht gezeigt) einzubauen, um dann nach Bedarf die eine oder andere Schale 1 oder 2 einer Kassette aus der vorderen Montageebene 30 nach vorn (Fig. 3 und 4) resp. aus der hinteren Montageebene 31 nach hinten (Fig. 1 und 2) relativ zur anderen, dann fixen Schale zu verschieben.

Die eine Schale 1 trägt stirnseitig eine Steckerplatte 10 mit einer Mehrzahl Stecker 9 und umfasst auf einer Seite einen Raum 11 mit Führungsmitteln 12 (Fig. 3,4) sowie auf der anderen Seite einen zweiten parallelen Raum 13 mit einem Führungskanal 7 mit Führungslaschen 18 (Fig. 2) zur Führung einer geschlauften und nachschleppbaren Glasfaserkabel-Arbeitsreserve 4, deren Einzeladern 40 einerseits mit den Steckern 9 verbunden und andrerseits mit den Einzeladern 40' des Uebertragungskabels 4' in nachfolgend noch näher erwähnten Art verspleisst sind.

Die Führungsmittel 12 in Form von Anschlägen, Laschen und Wandpartien der Schale sind dabei so ausgebildet, dass die geschlaufte Glasfaserkabel-Arbeitsreserve 4 unter Zug ihren Mindest-Krümmungsradius nicht unterschreiten kann.

Die andere Schale 2 hingegen weist einen Spleissraum 15 mit Spleissplatten 16 sowie Führungsmittel 17 für die geschlaufte Glasfaserkabel-Spleissreserve 4' auf. Auch hier verhindern Führungsmittel 17 in Form von Anschlägen, Laschen und Wandpartien der Schale ein Unterschreiten des Mindestkrümmungsradius der Spleissreserve 4'.

Durchbrechungen 14 in den Wandungen der Schalen 1 und 2 gestatten zudem ein ungehindertes Durchtreten der Glasfaserkabel und -adern von einer Schalenseite zur anderen.

Wie die Zeichnungen 1 bis 4 nun ohne weiteres erkennen lassen, findet bei einem Maximalauszug der Schalen 1 und 2 relativ zueinander ein Längenausgleich für die GlasfaserkabelReserven statt, der bei einer solchen Relativverschiebung zwischen den Schalen verhindert, dass die Glasfasern einer übermässigen Belastung unterliegen. Im geschlossenen Zustand der Kassette legen sich die Glasfaserkabel-Reserven mit einer Eigenvorspannung mit grösstmöglichem Krümmungsradius an der Führungswand 12 der Schalen an (Fig. 1 und 3). Wird dann die Schale 1 voll nach vorn aus der Ebene 30 resp. die Schale 1 nach hinten aus der Ebene 31 herausgezogen, nimmt die Vorspannung der Arbeitsreserve zu durch Zusammenziehen im Krümmungsradius, ohne dass Zug auf die Spleiss-Stelle entsteht, da ein Nachlaufen im Führungskanal 7 erfolgt. Beim Zurückschieben der Schalen relativ zueinander reguliert sich die Lage der Glasfaserkabel-Reserve von selbst unter Wirkung deren wieder abnehmenden Eigenvorspannung. Es erfolgt dabei ein praktisch reibungsfreies Zurückgleiten des Glasfaserkabels.

Aus dem Vorbeschriebenen ergibt sich somit eine Endverschluss-Anordnung für Signal-Uebertragungskabel, insbesondere Glasfaserkabel, die von grosser Universalität ist und eine umfassende Handhabung insbesondere in bezug auf die Verbindung hochempfindlicher Leitermittel erlaubt, wobei auch bei einer Kompaktmontage ohne weiteres sowohl ein Spleissen der Glasfaserkabel als auch ein individuelles Rangieren der Steckverbindungen möglich ist, ohne dass am Glasfaserkabel mechanische und optische Störfaktoren auftreten können.

Selbstverständlich sind im Rahmen der Erfindung Ausführungsvarianten denkbar. So kann beispielsweise anstelle der Steckerplatte 10 ohne weiteres auch eine Rangierkabel-Zugentlastungsplatte vorgesehen sein.

Aus dem Vorbeschriebenen ergibt sich somit eine Endverschluss-Anordnung für Signal-Uebertragungskabel, insbesondere Glasfaserkabel, die von grosser Universalität ist und eine umfassende Handhabung insbesondere inbezug auf die Verbindung hochempfindlicher Leitermittel erlaubt, wobei auch bei einer Kompaktmontage ohne weiteres ein Spleissen der Glasfaserkabel als auch ein individuelles Rangieren möglich ist, ohne dass am Glasfaserkabel mechanische und optische Störfaktoren auftreten können.

## Patentansprüche

1. Endverschluss-Anordnung für Glasfaserkabel der Tele- und Datenkommunikation, mit einem aus Teilen lösbar zusammengesetzten, Stecker- oder Zugentlastungsmittel und Spleissmittel tragenden Gehäuse zur Bildung eines ersten Raumes (11) mit raumbegrenzenden Führungslaschen (12) für die Aufnahme von Glasfaserkabel-Arbeitsreserven und zur Bildung eines Spleissraumes (15) mit Spleissplatten (16) sowie kanalbildenden Begrenzungsteilen (17) zur Aufnahme einer geschlauften Glasfaserkabel-Spleissreserve (4'), dadurch gekennzeichnet,
dass das Gehäuse eine aus zwei, in einer Ebene relativ zueinander verschiebbar miteinander verbundenen Gehäuseschalen (1,2) bestehende stapelbare Kassette ist, wobei die eine Schale (1) stirnseitig eine Stecker- oder Rangierkabel-Zugentlastungsplatte (10) umfasst und deren Boden auf einer Seite den ersten Raum (11) sowie auf der anderen Seite einen zweiten Raum (13) mit einem Ringkanal (7) zur Führung der geschlauften und nachschleppbaren Glasfaserkabel-Arbeitsreserve (4) begrenzt und wobei die andere Schale (2) den Spleissraum (15) aufweist.

## Claims

1. Cable head arrangement for glass-fibre cables in telecommunication and data communication, with a housing, which is assembled from parts and can be undone and which carries plug means or tension relief means, for formation of a first chamber (11) with space-limiting guide straps (12) for the reception of working reserves of glass-fibre cable and for formation of a splicing chamber (15) with splicing plates (16) as well as channel-forming boundary parts (17) for reception of a looped splicing reserve (4') of glass-fibre cable, characterised thereby that the housing is a stackable cassette consisting of two housing shells (1, 2) connected together to be displaceable relative to one another in a plane, wherein the one shell (1) at the end face comprises a tension relief plate (10) for plug cable or shunt cable and its base on one side bounds the first chamber (11) and on the other side bounds a second chamber (13) with an annular channel (7) for guidance of the looped and trailing working reserve (4) of glass-fibre cable and wherein the other shell (2) has the splicing chamber (15).

## Revendications

1. Boîte d'extrémité pour des câbles à fibres de verre de télécommunication de données, comprenant un boîtier qui porte des moyens d'épissage et des moyens de réduction de contrainte de traction ou des moyens de contact à fiche et qui est assemblé à partir de pièces amovibles, en vue de la formation d'une première chambre (11) délimitée au moyen de languettes de guidage (12) pour le logement de réserves de travail de câbles à fibres de verre et en vue de la formation d'une chambre d'épissage (15) présentant des plaques d'épissage (16) ainsi que des parties de délimitation (17) formant un canal pour le logement d'une réserve d'épissage (4') de câbles à fibres de verre en boucle caractérisée en ce que le boîtier est une cassette empilable se composant de deux coques de boîtier (1, 2) reliées entre elles de manière mobile dans un plan l'une par rapport à l'autre, une coque (1) comprenant, en face frontale, une plaque de connecteurs à fiches (10) ou de réduction de contrainte de traction de câbles à fiche et dont le fond délimite, d'un côté, la première chambre (11) et, de l'autre côté, une seconde chambre (13) comportant un canal annulaire (7) pour le guidage de la réserve de travail (4), en boucle et entraînée, des câbles à fibres de verre et l'autre coque (2) présentant la chambre d'épissage (15).
